# EUROPÄISCHE PATENTSCHRIFT

(11) **EP 0 511 505 B1**
(45) Veröffentlichungstag und Bekanntmachung des Hinweises auf die Patenterteilung: **04.10.1995**
(21) Anmeldenummer: 92105564.6
(22) Anmeldetag: 01.04.1992
(51) Int. Cl.: B65H 35/00

(54) **Folienspender**
Foil dispenser
Distributeur de feuilles

(30) Priorität: 27.04.1991 DE 9105208 U
(43) Veröffentlichungstag der Anmeldung: 04.11.1992
(73) Patentinhaber: Melitta Haushaltsprodukte GmbH & Co. Kommanditgesellschaft, D-32371 Minden (DE)
(72) Erfinder: Hörnlein, Reinhard, 3450 Holzminden (DE)
(74) Vertreter: Stracke, Alexander, Dipl.-Ing.

(56) Entgegenhaltungen:
- DE-A- 1 946 081
- FR-A- 2 602 758
- GB-A- 2 088 330
- US-A- 2 951 623
- US-A- 3 319 854

## Beschreibung

Die Erfindung bezieht sich auf einen Folienspender für Haushaltsfolien mit einen Gehäuse zur Aufnahme einer Folienrolle, in dem nach Abtrennen einer Folienbahn ein Teil der abgespulten Folie, die Folienfahne, die sich in Ruhestellung zwischen konturgerecht sich überlappenden Gehäuseteilen bis zu einer Abreißkante des Gehäuses erstreckt, verdeckt aufbewahrt und durch elastische Gehäusekräfte festgehalten wird und bei dem das Gehäuse einhändig durch Handkraft elastisch so verformbar ist, daß zur Erzeugung einer ergreifbar langen Folienfahne der überlappende Bereich des äußeren Gebäuseteils während eines Zusammendrückens des Gehäuses im Reibschluß mit der Folie gegenüber dem überlappten Bereich des inneren Gehäuseteiles bewegbar ausgeführt und an den Stirnseiten eine Haltelasche vorgesehen ist.

Es ist ein Folienspender dieser Art bekannt (FR-A-2 602 758), bei dem das Gehäuse einteilig und spiralförmig ausgebildet ist. Bei einer großen Überlappung der freien Enden bereitet die Öffnung des Gehäuses durch eine elastische Verformung Schwierigkeiten, so daß die Entnahme einer weitgehend abgespulten Folienrolle bzw. die Einführung einer neuen Folienrolle für die Hausfrau nicht einfach ist. Für die Auswechslung einer Folienrolle stehen zwar die stirnseitigen Öffnungen zur Verfügung, jedoch sind diese teilweise durch Haltelaschen abgedeckt, so daß die jeweilige Haltelasche zur Freigabe der stirnseitigen Öffnung deformiert werden muß.
Es ist ferner ein Folienspender bekannt (GB-A-2 088 330), bei dem das Gehäuse aus zwei Gehäuse teilen besteht, die über ein Filmscharnier miteinander verbunden sind. Diese Gehäuseteile sind an den Stirnseiten durch Scheiben verschlossen und weisen im Bereich ihrer freien Ränder dreieckförmige Flansche auf, von denen einer verrippt ist. Diese Flansche begrenzen einen Entnahmespalt und bilden eine mittige Spitze, durch die das Abtrennen der Folie vereinfacht werden soll. Nach dem Abtrennen einer Folge ragt noch ein Teil der Folienfahne aus dem Entnahmespalt hervor, so daß die Folienfahne nicht durch Gehäuseteile abgedeckt wird.

Der Erfindung liegt die Aufgabe zugrunde, einen Folienspender der eingangs genannten Art mit vergrößertem Einsatzbereich zu gestalten.

Diese Aufgabe wird durch die Merkmale des kennzeichnenden Teils des Patentanspruches 1 im Zusammenwirken mit den Merkmalen des Oberbegriffs gelöst.

Da das Gehäuse aus zwei schalenartigen Gehäuseteilen besteht, die durch ein Scharnier miteinander verbunden sind, kann die Öffnung des Gehäuses zum Einlegen einer Folienrolle ohne Schwierigkeiten vorgenommen werden. Bei dem erfindungsgemäßen Gehäuse ist es egal, welches von beiden sich überlappenden Gehäuseteilen das innere oder das äußere Gehäuseteil darstellt, da beide freien Kanten der Gehäuseteile als Abreißkanten ausgeführt sind. Entweder nach dem Stumpfwerden der einen Abreißkante wird in der Folgezeit die zweite Abreißkante benutzt oder es werden beide Abreißkanten für verschiedene Folienarten unterschiedlich ausgeführt. An dem erfindungsgemäßen Folienspender kann eine zweite, unabhängige Trennvorrichtung mit einem parallel zum Entnahmespalt beweglichen Schneidesystem befestigt werden, so daß der Folienspender auch für Folienarten eingesetzt werden kann, bei denen ein Abreißen gar nicht oder nur bedingt möglich ist.

Weitere Ausgestaltungen des Gegenstands der Erfindung ergeben sich aus den abhängigen Ansprüchen.

Nachfolgend sind einige Ausführungsbeispiele der Erfindung anhand der Zeichnungen näher beschrieben.
Es zeigen:
- Figur 1: einen elastische verformbaren Folienspender,
- Figur 2: eine Seitenansicht der Figur 1,
- Figur 3: einen geöffneten Folienspender nach Figur 1,
- Figur 4: eine Seitenansicht der Figur 3,
- Figur 5: einen Folienspender mit Eingriffsöffnung,
- Figur 6: eine Seitenansicht der Figur 5
- Figur 7: einen rechteckigen Folienspender mit Eingriffsöffnung,
- Figur 8: eine Seitenansicht der Figur 7,

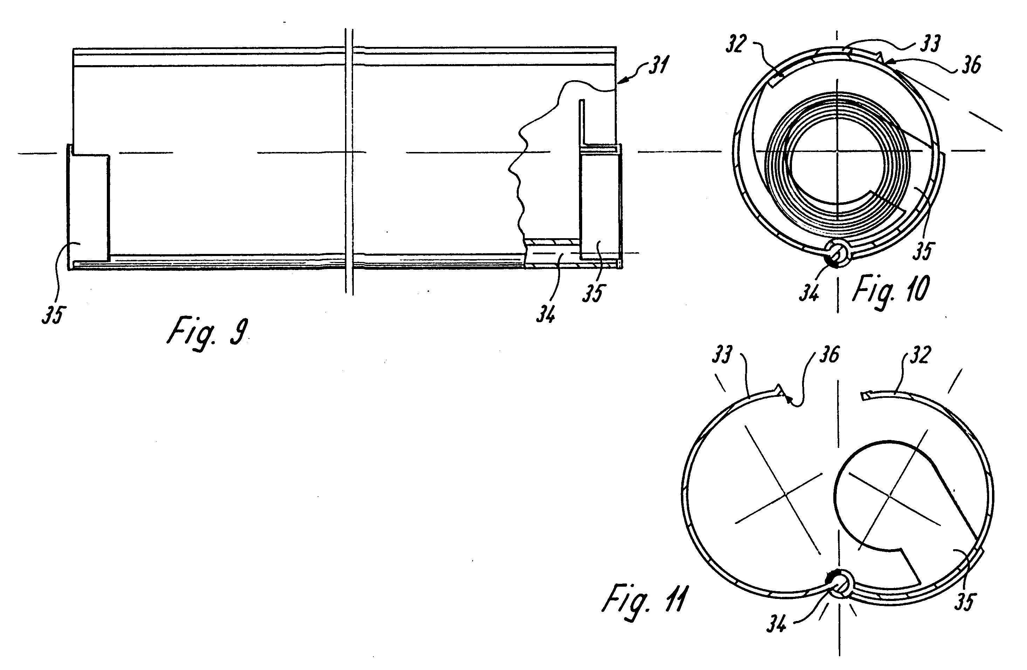

- Figur 9: einen Folienspender mit Scharnier,
- Figur 10: eine Seitenansicht der Figur 9 im Schnitt,
- Figur 11: eine Seitenansicht des Folienspenders nach Figur 9 in geöffnetem Zustand,
- Figur 12: eine Spenderversion mit zwei Scharnieren und einem Zwischenstreifen,
- Figur 13: eine Seitenansicht der Figur 12,
- Figur 14: einen Zwischenstreifen,
- Figur 15: einen Zwischenstreifen in Draufsicht.

Der erfindungsgemäße Folienspender besitzt in jeder Variante ein Gehäuse 1, 11, 21, 31, 51 mit mindestens zwei schalenartigen Gehäuseteilen 2, 12, 22, 32, 52, 3, 13, 23, 33, 53, die an ihren einen Längsseiten miteinander verbunden sind und deren anderen Längsseiten sich in einem Winkelbereich konturgerecht überlappen, wobei die Folienfahne einer in das Gehäuse eingelegten Folienrolle durch elastische Gehäusekräfte zwischen der Überlappung festgehalten wird. Zum Hervortransportieren einer ergreifbar langen Folienfahne läßt sich das Gehäuse 1, 11, 21, 31, 51 einhändig durch Handkraft elastisch so verformen, daß nach zwei- bis dreimaligem Zusammendrücken und Entspannen des Gehäuses eine ausreichend lange Folienfahne zur Verfügung steht. Als Transportmechanismus wird dabei angenommen, daß während des Zusammendrückens zwischen der Folie und dem äußeren überlappenden Gehäuseteil 3, 13, 23, 33, 53 ein Reibschluß besteht, bzw. daß die Reibung auf den inneren überlappten Gehäuseteil 2, 12, 22, 32, 52 geringer ist als die zwischen äußerem Gehäuseteil und der Folie. Beim Entspannen des Spendergehäuses überwiegt jedoch die Reibung zwischen innerem überlappten Gehäuseteil 2, 12, 22, 32, 52 und der Folie, so daß sich bei jedem Zusammendrücken und Entspannen des Spendergehäuses eine Folienbahn ein kurzes Stück aus dem Spendergehäuse hervortransportieren läßt.

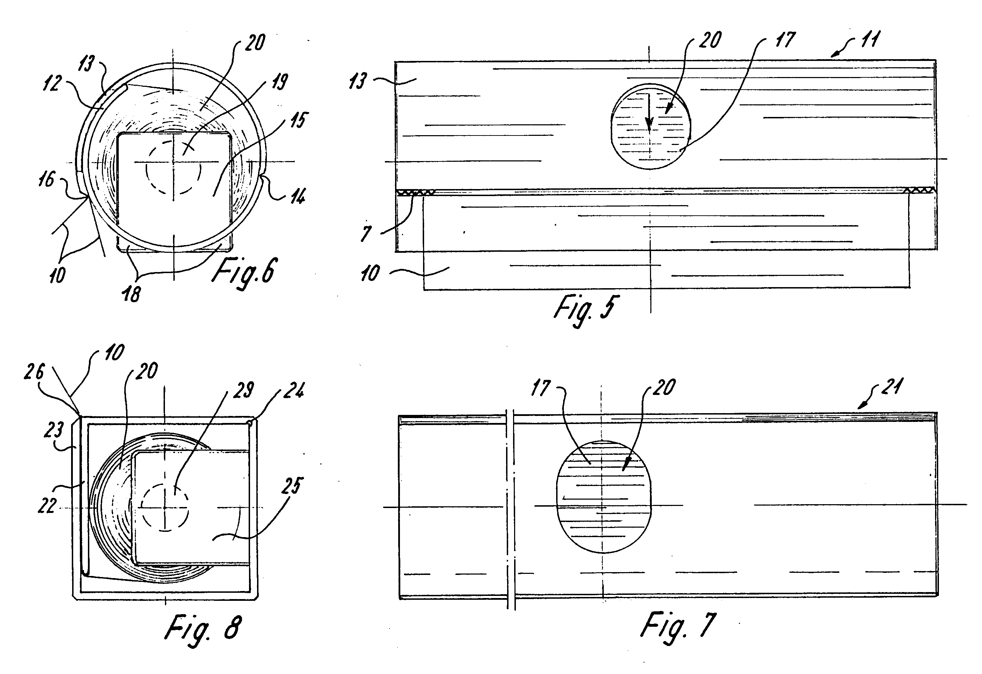

Dieser Transportmechanismus läßt sich überlagern durch einen weiteren, nämlich durch das Hervorschieben der Folie durch eine beispielsweise in den Figuren 5 und 7 dargestellte Eingriffsöffnung 17. Durch diese kann, vorzugsweise mit einem Daumen, entweder unmittelbar auf die auf dem inneren überlappten Gehäuseteil 12, 22 aufliegende Folie ober über ein weiteres bewegbares und auf die Folie drückbares Bauteil eingewirkt werden.

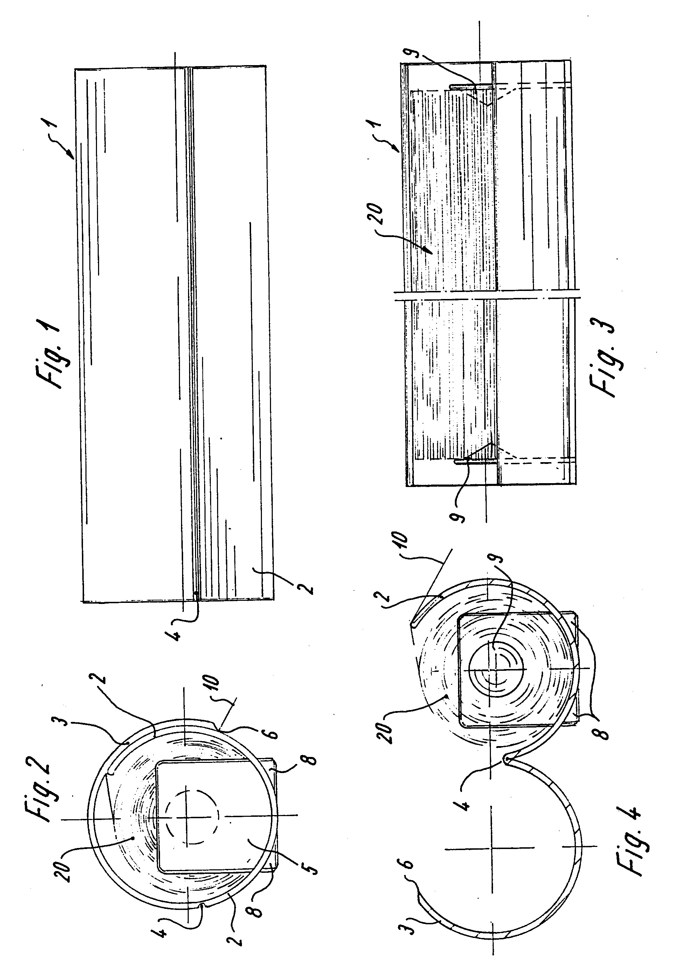

In den Figuren 1 - 6 ist ein Folienspender dargestellt, dessen Gehäuse 1, 11 aus zwei hohlzylinderförmigen schalenartigen Gehäuseteilen, einem inneren Gehäuseteil 2, 12 und einem äußeren Gehäuseteil 3, 13 besteht, die über ein Filmscharnier 4, 14 miteinander verbunden sind und die sich in einem Winkelbereich von ca. 90° überlappen. An den Stirnseiten ist jeweils im inneren Gehäuseteil 2, 12 eine radial nach innen gerichtete Haltelasche 5, 15 angebracht, die einen nach innen gerichteten Führungskegel 9, 19 aufweist, so daß eine in das Gehäuse 1, 11 eingelegte Folienrolle von den Haltelaschen 5, 15 axial gehalten werden kann. Die über die Außenkontur des Gehäuses 1, 11 hervorstehenden Ecken der Haltelaschen 5, 15 stellen gleichzeitig ein Auflager 8, 18 zur Ablage des Folienspenders dar.

In den Figuren 7 und 8 ist ein rechteckiges Gehäuse 21 dargestellt, das aus einem U-förmigen und einem L-förmigen Gehäuseteil besteht, wobei ein Schenkel des L-förmigen Gehäuseteiles den konturgerechten inneren Gehäuseteil 22 bildet und ein Schenkel des U-förmigen Gehäuseteiles den äußeren Gehäuseteil 23. Auf der der Überlappung abgewandten Seite sind beide Gehäuseteile ebenfalls durch ein Filmscharnier 24 miteinander verbunden.

Die vorgenannten U- bzw. L-förmigen Gehäuseteile sind ebenso wie die entsprechenden Gehäuseteile aller anderen Gehäusevarianten des erfindungsgemäßen Folienspenders dazu in der Lage, das Gehäuse im zugeklappten Zustand geschlossen zu halten.

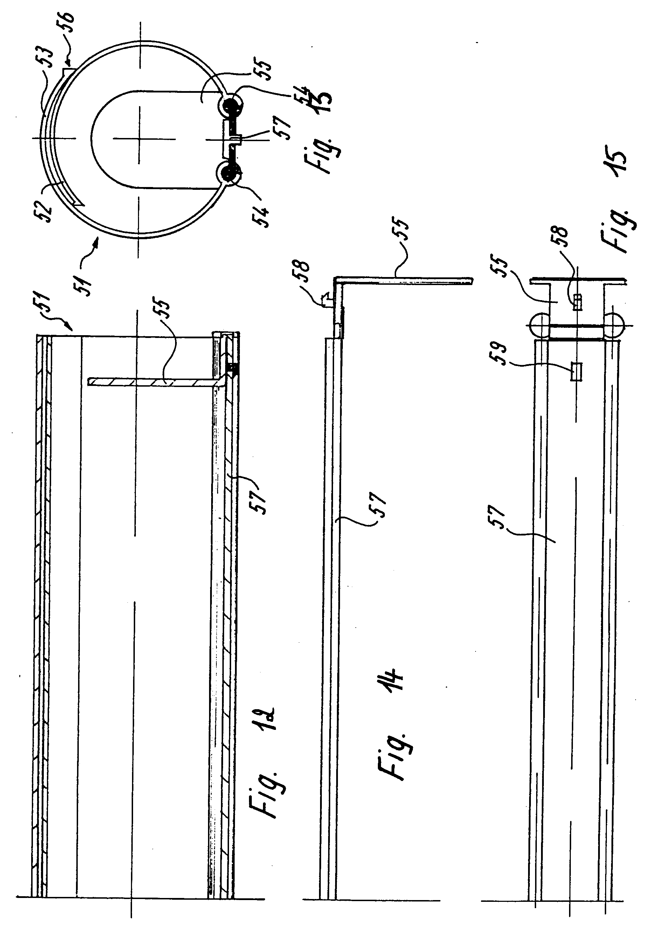

In den Figuren 12 - 15 ist die Variation eines Gehäuses 51 dargestellt, das zwei überwiegend gleiche wannenförmige Gehäuseteile aufweist, die über Scharniere 54 an einem Zwischenstreifen gelenkig angebracht sind und die, je nachdem welches von beiden Gehäuseteilen im zusammengeklappten Zustand das andere teilweise überlappt, abwechselnd entweder das innere Gehäuseteil 52 oder das äußere Gehäuseteil 53 darstellen können. Die Abreißkanten 56 können dabei identisch ausgeführt sein, so daß sich die mögliche Gebrauchsdauer ohne Schärfen der Abreißkante verdoppelt, sie können allerdings auch verschiedenartig und auf unterschiedliche Folienarten zugeschnitten sein.

Eine solche Variante mit zwei Abreißkanten läßt sich natürlich bei allen anderen denkbaren Varianten ebenfalls verwirklichen. Eine solche Abreißkante 6, 16, 26, 36, 56 kann beispielsweise als geradlinige scharfe Kante ausgeführt sein, die im Bereich des Folienrandes als Einreißhilfe mit mehreren Einzelzähnen 7 versehen ist.

Nicht zeichnerisch dargestellt ist eine Variante des Folienspenders, auf dessen überlappendem äußeren Gehäuseteil eine Führung für eine zweite unabhängige Trennvorrichtung vorgesehen ist, die beispielsweise ein parallel zum Entnahmespalt bewegbares Schneidsystem besitzt, mit dem eine Folienbahn in Auszugsrichtung der Folie hinter der Abreißkante 6, 16, 26, 36, 56 abtrennbar ist.

## Patentansprüche

1. Folienspender für Haushaltsfolien mit einem Gehäuse zur Aufnahme einer Folienrolle, in dem nach Abtrennen einer Folienbahn ein Teil der abgespulten Folie, die Folienfahne, die sich in Ruhestellung zwischen konturgerecht sich überlappenden Gehäuseteilen bis zu einer Abreißkante des Gehäuses erstreckt, verdeckt aufbewahrt und durch elastische Gehäusekräfte festgehalten wird und bei dem das Gehäuse einhändig durch Handkraft elastisch so verformbar ist, daß zur Erzeugung einer ergreifbar langen Folienfahne der überlappende Bereich des äußeren Gehäuseteils während eines Zusammendrückens des Gehäuses im Reibschluß mit der Folie gegenüber dem überlappten Bereich des inneren Gehäuseteiles bewegbar ausgeführt und an den Stirnseiten eine Haltelasche vorgesehen ist, **dadurch gekennzeichnet,** daß das Gehäuse aus zwei schalenartigen Gehäuse teilen (2,3;12,13;22,23;32,33;52,53) besteht, die an der der Überlappung abgewandten Seite durch ein Scharnier (4,14,24,34) unmittelbar oder über einen Zwischenstreifen (57) mittelbar gelenkig miteinander verbunden sind, die Gehäuseteile bei geschlossenem Gehäuse sich über einen Winkelbereich von ca. 90° überlappen, die stirnseitige Haltelasche (5, 15,25,35,55) an einem Gehäuseteil oder am Zwischenstreifen (57) festgelegt ist und je nachdem, welches der beiden Gehäuseteile im zusammengeklappten Zustand das andere teilweise überlappt, beide Gehäuseteile entweder das innere Gehäuseteil oder das äußere Gehäuseteil bilden und an den freien Längskanten der Gehäuseteile Abreißkanten vorgesehen sind.

2. Folienspender nach Anspruch 1, dadurch gekennzeichnet, daß die Folienfahne einer in das Gehäuse eingelegten Folienrolle durch elastische Gehäusekräfte zwischen der Überlappung festgehalten wird.

3. Folienspender nach Anspruch 1, dadurch gekennzeichnet, daß die Abreißkanten identisch ausgeführt sind.

4. Folienspender nach Anspruch 1, dadurch gekennzeichnet, daß die Abreißkanten unterschiedlich und zwar für verschiedene Folienarten ausgebildet sind.

5. Folienspender nach Anspruch 1, dadurch gekennzeichnet, daß die Haltelaschen (5,15) sich über die Außenkanten des Gehäuses erstrecken und ein Auflager (8,18) des Folienspenders bilden.

6. Folienspender nach einem der vorhergehenden Ansprüche, dadurch gekennzeichnet, daß auf dem überlappenden äußeren Gehäuseteil eine Führung für eine zweite unabhängige Trennvorrichtung mit parallel zum Entnahmespalt bewegbaren Schneidsystemen befestigbar ist, mit dem eine Folienbahn in Auszugrichtung der Folie hinter der Abreißkante (6,16,26,36,56) abtrennbar ist.

## Claims

1. A foil dispenser for household foils having a housing for accommodating a roll of foil, in which, after a web of foil has been taken off, a part of the unwound foil, the foil tail which in the rest position extends between housing portions which overlap in contour-matched relationship to a tear-off edge of the housing is stored in a concealed condition and is held fast by elastic housing forces and wherein the housing is elastically deformable by manual force using one hand in such a way that, to produce a foil tail of such a length that it can be gripped, the overlapping region of the outer housing portion is adapted to be movable while the housing is compressed in frictional engagement with the foil relative to the overlapped region of the inner housing portion, and provided at the ends is a holding plate portion, characterised in that the housing comprises two shell-like housing portions (2, 3; 12, 13; 22, 23; 32, 33; 52, 53) which at the side remote from the overlap are pivotably connected together directly by a hinge (4, 14, 24, 34) or indirectly by way of an intermediate strip (57), the housing portions, when the housing is closed, overlap over an angular region of about 90°, the end holding plate portion (5, 15, 25, 35, 55) is fixed to a housing portion or to the intermediate strip (57), and depending on which of the two housing portions partially overlaps the other in the condition in which they are pivoted together, both housing portions form either the inner housing portion or the outer housing portion, and tear-off edges are provided at the free longitudinal edges of the housing portions.

2. A foil dispenser according to claim 1 characterised in that the foil tail of a roll of foil which is fitted into the housing is held fast by elastic housing forces between the overlap.

3. A foil dispenser according to claim 1 characterised in that the tear-off edges are of an identical configuration.

4. A foil dispenser according to claim 1 characterised in that the tear-off edges are of different configurations and are designed more specifically for different kinds of foils.

5. A foil dispenser according to claim 1 characterised in that the holding plate portions (5, 15) extend beyond the outside edges of the housing and form a support (8, 18) for the foil dispenser.

6. A foil dispenser according to one of the preceding claims characterised in that a guide for a second independent severing device with cutting systems movable parallel to the removal gap, with which a web of foil can be severed behind the tear-off edge (6, 16, 26, 36, 56) in the foil pull-out direction, can be fixed on the overlapping outer housing portion.

## Revendications

1. Distributeur de feuilles pour des feuilles à usage ménager, comprenant un boîtier recevant un rouleau de feuilles, et après séparation d'une bande de feuille , une partie de la feuille dévidée , c'est-à-dire l'amorce de feuille qui se trouve en position de repos entre des parties de boîtier qui chevauchent en épousant le contour, arrive jusqu'à l'arête d'arrachage du boîtier et est conservée, protégée en étant maintenue par les forces élastiques exercées par le boîtier, et ce boîtier peut être déformé élastiquement par l'effort exercé par une seule main de sorte que pour créer une amorce de feuille de longueur suffisante pour être prise à la main, la zone de chevauchement de la partie extérieure du boîtier, pendant la compression du boîtier, est en liaison de frottement, avec la feuille par rapport à la zone de chevauchement de la partie intérieure de boîtier, et les faces frontales comportent une patte de retenue, caractérisé en ce que le boîtier se compose de deux parties en forme de coquilles (2, 3, 12, 13, 22, 32, 33 ; 52, 53) reliées par une charnière (4, 14, 24, 34) au niveau de leur côté opposé à celui du chevauchement ou reliées de manière articulée par une bande intermédiaire 57, et lorsque le boîtier est fermé, les parties du boîtier se chevauchent sur un arc d'angle d'environ 90°, la Patte de retenue frontale (5, 15, 25, 35, 55) étant fixée sur une partie de boîtier ou sur la bande intermédiaire (57) et suivant celle des deux parties de boîtier qui chevauche partiellement l'autre partie lorsque l'autre boîtier est replié, les deux parties de boîtier forment, soit la partie intérieure du boîtier, soit la partie extérieure du boîtier et comportent des arêtes d'arrachage sur leur bord longitudinal libre.

2. Distributeur de feuilles selon la revendication 1, caractérisé en ce que l'amorce de feuille d'un rouleau de feuilles placé dans le boîtier est maintenu par des efforts élastiques exercés par le boîtier entre les parties en chevauchement.

3. Distributeur de feuilles selon la revendication 1, caractérisé en ce que les arêtes d'arrachage sont identiques.

4. Distributeur de feuilles selon la revendication 1, caractérisé en ce que les arêtes d'arrachage sont différentes et sont conçues pour des types de feuilles différentes.

5. Distributeur de feuilles selon la revendication 1, caractérisé en ce que les pattes de retenue (5, 15) dépassent des arêtes extérieures du boîtier et forment un appui (8, 18) pour le distributeur de feuilles.

6. Distributeur de feuilles selon l'une des revendications précédentes, caractérisé en ce que sur la partie extérieure du boîtier, en chevauchement, il est prévu un moyen de guidage pour un second dispositif de séparation, indépendant, et qui se fixe avec un système de couple mobile parallèlement à la fente d'extraction permettant de couper un morceau de feuille , en aval de l'arête de coupe (6, 16, 36, 56) dans le sens d'extraction de la feuille.
